(19) Europäisches Patentamt
European Patent Office
Office européen des brevets

(11) **EP 3 032 686 A1**

(12) **EUROPÄISCHE PATENTANMELDUNG**

(43) Veröffentlichungstag:
**15.06.2016 Patentblatt 2016/24**

(21) Anmeldenummer: **16153362.5**

(22) Anmeldetag: **26.03.2013**

(51) Int Cl.:
**H02J 3/38** *(2006.01)*    **F03D 7/02** *(2006.01)*
**F03D 9/00** *(2016.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.06.2012 DE 102012012401**

(62) Dokumentnummer(n) der früheren Anmeldung(en) nach Art. 76 EPÜ:
**13161084.2 / 2 680 390**

(71) Anmelder: **RWE Innogy GmbH**
**45127 Essen (DE)**

(72) Erfinder:
• **FELTES, Christian**
**22453 Hamburg (DE)**

• **RUNGE, Jörn**
**22297 Hamburg (DE)**
• **KOCH, Friedrich**
**47623 Kevelaer (DE)**

(74) Vertreter: **Cohausz & Florack**
**Patent- & Rechtsanwälte**
**Partnerschaftsgesellschaft mbB**
**Bleichstraße 14**
**40211 Düsseldorf (DE)**

Bemerkungen:
Diese Anmeldung ist am 29-01-2016 als Teilanmeldung zu der unter INID-Code 62 erwähnten Anmeldung eingereicht worden.

(54) **VERFAHREN ZUR STROMREGELUNG**

(57) Die Erfindung betrifft ein Verfahren zur Stromregelung eines Offshore-Windenergiesystems (2), wobei das Offshore-Windenergiesystem (2) mindestens ein Seekabel (8, 10) aufweist, umfassend Erfassen des an einem Einspeisepunkt des Seekabeis (8, 10) eingespeisten Stroms, Bestimmen eines für das Seekabel (8, 10) maximal zulässigen Stroms in Abhängigkeit eines vorgegeben Wertes eines Temperaturparameters in einem Bezugspunkt, welcher in einer vorgegeben Tiefe des Meeresbodens (26) liegt, und Regeln des in das Seekabel (8, 10) eingespeisten Stroms, derart, dass der eingespeiste Strom den bestimmten maximal zulässigen Strom nicht übersteigt.

Fig.1

EP 3 032 686 A1

**Beschreibung**

Die Erfindung betrifft ein Verfahren zur Stromregelung eines Offshore-Windenergiesystems, wobei das Offshore-Windenergiesystem mindestens ein Seekabel aufweist. Darüber hinaus betrifft die Erfindung ein Offshore-Windenergiesystem.

Die Nachfrage nach Energie aus regenerativen Quellen steigt stetig. Eine der zur Verfügung stehenden Ressourcen ist hierbei die Windenergie. Eine Windkraftanlage wandelt die kinetische Energie des Windes mittels eines Rotors und eines Generators in elektrische Energie um.

Um den Energieertrag zu maximieren, kann aus mehreren Windkraftanlagen ein Windenergiesystem gebildet werden. Die Windkraftanlagen können insbesondere in Gebieten mit hoher Windwahrscheinlichkeit und -intensität aufgestellt werden. Besonders geeignet sind Standorte auf der offenen See bzw. dem Meer, auch Offshore-Gebiete genannt.

Das Betreiben eines Offshore-Windenergiesystems mit einer Mehrzahl von Windkraftanlagen und einer Substation und die Anbindung an das übergeordnete Netz ist grundsätzlich aufgrund des Offshore-Standorts problematischer als das Betreiben eines Onshore-Windenergiesystems bzw. dessen Anbindung an das übergeordnete Netz. Die Windkraftanlagen sind untereinander und mit der Substation über Seekabel verbunden. Bei einem Seekabel handelt es sich insbesondere um ein Mittelspannungsseekabel oder ein Hochspannungsseekabel. Ein derartiges Seekabel ist zur Übertragung von Energie konfiguriert.

In der Regel ist ein Offshore-Windenergiesystem, insbesondere die Substation, über mindestens ein Seekabel an das öffentliche Stromnetz bzw. eine Kopfstation, wie eine Hochspannungs-Gleichstrom-Übertragungs-Station (HGÜ-Station), angeschlossen.

Ein derartiges Seekabel ist in der Regel im Meeresboden in einer bestimmten Tiefe vergraben. Für das Betreiben eines derartigen Seekabels bestehen bestimmte Umweltschutzauflagen. Eine dieser Umweltschutzauflagen ist das einzuhaltende so genannte 2K-Kriterium. Das 2K-Kriterium verlangt, dass der Temperaturanstieg im Meeresboden (oberhalb) des Seekabels in einer Tiefe von 0,2 m bis 0,3 m 2 Kelvin nicht übersteigen darf. Die im Stand der Technik eingesetzten Seekabel sind in der Regel deutlich überdimensioniert, so dass im Normalbetrieb des Offshore-Windenergiesystems ein derartiger Temperaturanstieg nicht erreicht wird. Mit anderen Worten bewirkt der durch ein Seekabel fließende Strom keine Erwärmung des Meeresbodens über 2 Kelvin. Problematisch kann es zum Beispiel bei einem Ausfall eines Seekabels werden, wenn danach ein parallel angeordnetes Seekabel den Gesamtstrom übernehmen muss.

Beispielsweise kann ein Offshore-Windenergiesystem insbesondere eine Offshore-Windenergieeinrichtung des Offshore-Windenergiesystems über zwei Seekabel mit einer Onshore-HGÜ-Station verbunden sein. Fällt eines dieser Seekabel beispielsweise aufgrund eines defekten Transformators oder eines Kabelfehlers aus, ist es in der Regel erforderlich, den vorherigen über beide Seekabel fließenden Strom zu reduzieren, um das Temperaturkriterium einzuhalten. Ferner sollte der Bemessungsstrom des Seekabels nicht überschritten wird.

Aus dem Stand der Technik ist es bekannt, zur Einhaltung des 2K-Kriteriums bei einem Ausfall eines Seekabels die zulässige über das weitere Seekabel übertragbare Leistung bzw. den maximal zulässigen Strom pauschal auf 50 % der Offshore-Windenergiesystemleistung bzw. des maximalen Stroms zu begrenzen. Entsprechendes wird in der Regel von einem Netzbetreiber vorgegeben.

Nachteilig hieran ist jedoch, dass die Übertragungskapazität des (noch) funktionsfähigen Seekabels nicht maximal ausgenutzt wird. So wird zwar das 2K-Kriterium sicher eingehalten, gleichzeitig jedoch nicht die maximal mögliche Leistung bzw. der maximal zulässige Strom über das Seekabel übertragen.

Der Erfindung liegt daher die Aufgabe zugrunde, ein Verfahren zur Stromregelung eines Offshore-Windenergiesystems und ein Offshore-Windenergiesystem bereitzustellen, bei dem unter Einhaltung eines Temperaturkriteriums, insbesondere dem 2K-Kriteriums, die über mindestens ein Seekabel übertragbare Leistung erhöht werden kann.

Die Aufgabe wird erfindungsgemäß durch ein Verfahren zur Stromregelung eines Offshore-Windenergiesystems gemäß dem Patentanspruch 1 gelöst. Das Verfahren zur Stromregelung eines Offshore-Windenergiesystems, wobei das Offshore-Windenergiesystem mindestens ein Seekabel aufweist, umfasst folgende Schritte:

- Erfassen des an einem Einspeisepunkt des Seekabels eingespeisten Stroms,
- Bestimmen eines für das Seekabel maximal zulässigen Stroms in Abhängigkeit eines vorgegeben Wertes eines Temperaturparameters in einem Bezugspunkt, welcher in einer vorgegeben Tiefe des Meeresbodens liegt, und
- Regeln des in das Seekabel eingespeisten Stroms, derart, dass der eingespeiste Strom den bestimmten maximal zulässigen Strom nicht übersteigt.

Im Gegensatz zum Stand der Technik wird erfindungsgemäß der über das mindestens eine Seekabel übertragene Strom derart geregelt, dass ein von einem einzuhaltenden Temperaturkriterium abhängiger maximaler Strom nicht überschritten wird. Durch die Bestimmung des maximal zulässigen Stroms kann zudem die maximal zulässige Strommenge über das mindestens eine Seekabel übertragen werden. Mit anderen Worten kann das mindestens eine Seekabel besser genutzt werden.

Das vorliegende Verfahren zur Stromregelung ist insbesondere zum Betreiben eines Offshore-Windenergiesystems geeignet. Das Offshore-Windenergiesystem umfasst mindestens ein Seekabel. Ferner kann das Offshore-Windenergiesystem mindestens eine mit mindestens einer Substation elektrisch verbundene Windkraftanlage aufweisen. Die Substation kann elektrisch mit einer Onshore-Station, wie eine HGÜ-Station, verbunden sein. Eine elektrische Verbindung kann insbesondere durch ein Seekabel realisiert sein. Es versteht sich, dass eine Mehrzahl von Windkraftanlagen und/oder eine Mehrzahl von Seekabeln vorgesehen sein können.

Zum Regeln des durch das mindestens eine Seekabel fließenden Stroms wird der (aktuell) in das Seekabel eingespeiste Strom an einem Einspeisepunkt erfasst. Beispielsweise kann eine geeignete Strommesseinrichtung vorgesehen sein. Vorzugsweise kann diese in einer Windenergieeinrichtung angeordnet sein, welche den Strom in das Seekabel einspeist.

Darüber hinaus wird in Abhängigkeit eines vorgegebenen Temperaturkriteriums, beispielsweise dem 2K-Kriterium, der maximal zulässige Strom bestimmt, der über das mindestens eine Seekabel fließen darf, ohne das Temperaturkriterium zu verletzen. Für die Temperaturentwicklung in einem Bezugspunkt im Meeresboden ist insbesondere die Verlustleistung des Seekabels verantwortlich. Die Verlustleistung hängt unter anderem von dem eingespeisten Strom ab.

Wie bereits ausgeführt wurde, kann es sich bei dem vorgegebenen Wert des Temperaturparameters um einen Grenzwert handeln, der nicht überschritten (oder unterschritten) werden darf. Es kann der Strom bestimmt werden, bei dem sich der vorgegeben Wert des Temperaturparameters einstellt. Der Bezugspunkt liegt in einem bestimmten Abstand zur Meeresoberfläche und kann beispielsweise 0,2 m bis 0,3 m betragen.

Nachdem der maximal zulässige, beispielsweise zeitkonstante oder zeitvariante Strom, bestimmt worden ist, wird der eingespeiste Strom zumindest in Abhängigkeit von diesem Strom geregelt. Vorzugsweise kann der eingespeiste Strom im Wesentlichen gleich dem bestimmten maximal zulässigen Strom gesetzt werden. Ein maximal zulässiger Strom und damit eine maximal zulässige Leistung kann über das Seekabel übertragen werden.

Das erfindungsgemäße Verfahren ist insbesondere bei einem Ausfall von einem von zumindest zwei Seekabelsystemen von Vorteil, um das verbliebene funktionsfähige Seekabel maximal nutzen zu können. Darüber hinaus kann das Verfahren bei einer Erweiterung eines bestehenden Offshore-Windenergiesystem vorteilhafterweise eingesetzt werden, um vor einem aufwendigen Austausch von vorhandenen Seekabeln durch leistungsstärkere Seekabel zunächst die vorhandenen Seekabel besser zu nutzen. Auch kann das Verfahren bereits bei der Planung neuer Offshore-Windenergiesysteme einbezogen werden, um kleinere Kabelquerschnitte oder weniger Kabelverbindungen oder geringere Kabeltiefen zu erhalten.

Es sei angemerkt, dass vorliegend unter dem Begriff "Strom" der "Scheinstrom" und unter dem Begriff "Leistung" die "Scheinleistung" zu verstehen ist, sofern nichts anderes angegeben ist.

Gemäß einer ersten Ausführungsform des erfindungsgemäßen Verfahrens kann zum Regeln des eingespeisten Stroms mindestens ein Stromerzeugungssollwert von mindestens einer Windkraftanlage derart eingestellt werden, dass der eingespeiste Strom den bestimmten maximal zulässigen Strom nicht übersteigt. Beispielsweise kann eine Regelungseinrichtung mindestens einer Windkraftanlage einen Stromerzeugungssollwert vorgeben, wobei die Windkraftanlage zumindest einen Teil des in das Seekabel eingespeisten Stroms erzeugt. Vorzugsweise kann jeder Windkraftanlage, dessen Strom über das Seekabel fließt, ein entsprechender Stromerzeugungssollwert vorgegeben werden. Der Stromerzeugungssollwert kann für jede Windkraftanlage individuell bestimmt werden oder für sämtliche Windkraftanlagen gleich sein. Insbesondere kann der mindestens eine Stromerzeugungssollwert derart vorgegeben werden, dass der in das Seekabel eingespeiste Strom im Wesentlichen dem maximal zulässigen Strom entspricht. In einfacher Weise kann der in das Seekabel eingespeiste Strom geregelt werden.

Grundsätzlich können verschiedene Temperaturparameter vorgegeben werden. Vorzugsweise ist gemäß einer weiteren Ausführungsform der Temperaturparameter ein maximal zulässiger Temperaturanstig. Um das 2K-Kriterium zu erfüllen, kann der maximal zulässige Wert des Temperaturanstiegs insbesondere 2 Kelvin betragen. In einfacher und sicherer Weise kann das 2K-Kriterium (stets) eingehalten werden. Es versteht sich, dass auch andere Temperaturanstiegswerte beispielsweise in Folge einer gesetzlichen Änderung der Umweltschutzauflagen denkbar sind.

Um besonders einfach und mit wenig Rechenzeit einer Datenverarbeitungsanlage einen maximal zulässigen Strom zu bestimmen, wird erfindungsgemäß insbesondere ein stationärer Ansatz, also ein zeitunabhängiger Ansatz, vorgeschlagen. Gemäß einer Ausführungsform kann der maximal zulässige Temperaturparameter ein stationärer Temperaturparameter sein. Der bestimmte maximal zulässige Strom kann zeitunabhängig sein. Mit anderen Worten wird der in das Seekabel eingespeiste Strom auf einen konstanten Stromwert geregelt.

Darüber hinaus kann gemäß einer weiteren Ausführungsform des erfindungsgemäßen Verfahrens der maximal zulässige Strom in Abhängigkeit des Widerstands des Seekabels und/oder des Abstands des Seekabels zu dem Bezugspunkt und/oder des Abstands des an der Meeresoberfläche gespiegelten Seekabels zu dem Bezugspunkt und/oder der thermischen Leitfähigkeit des Meeresbodens bestimmt werden. Insbesondere kann ein zeitinvarianter maximal zulässiger Strom in Abhängigkeit sämtlicher Parameter bestimmt werden. Vorzugsweise kann eine Berechungsvorschrift beispielsweise in einer geeigneten Recheneinrichtung implementiert werden. Die Recheneinrichtung, wie eine Prognoseeinrichtung, kann dazu eingerichtet sein, mittels dieser Parameter und dem Wert des Temperaturparameters durch die Berechungsvorschrift den maximal zulässigen Strom zu berechnen. Eine zeitnahe und genaue Bestimmung des maximal zulässigen Stroms ist möglich.

Alternativ oder zusätzlich zu dem zuvor beschriebenen stationären Ansatz kann für eine noch bessere Ausnutzung der vorhandenen Ressourcen ein dynamischer Ansatz verfolgt werden. Gemäß einer bevorzugten Ausführungsform des erfindungsgemäßen Verfahrens kann der maximal zulässige Temperaturparameter ein zeitabhängiger Temperaturparameter sein und der bestimmte maximal zulässige Strom zeitabhängig sein. Indem ein zeitabhängiger maximaler Strom bestimmt wird, ist es möglich, die während des Betriebs eines Offshore-Windenergiesystems auftretenden Fluktuation bei der Energieerzeugung, beispielsweise aufgrund von Änderungen der Windstärke, zu berücksichtigen bzw. zu nutzen. Insbesondere ist erkannt worden, dass die Änderung der Temperatur im Meeresboden mit einer Zeitverzögerung von Stunden bis Tagen erfolgt. Daher kann beispielsweise zunächst ein höherer Strom für eine bestimmte Zeitdauer als bei einer stationären Betrachtung durch das Seekabel fließen, wenn anschließend, beispielsweise aufgrund einer geringeren Windstärke, ein gegenüber der stationären Betrachtung geringerer Strom durch das Seekabel fließt. Insbesondere kann in einem ersten Zeitraum ein Strom in das Hochspannungskabel eingespeist werden, der größer ist, als der Strom in einem anschließenden zweiten Zeitraum. Die übertragbare Strommenge kann noch weiter gesteigert werden, wenn beispielsweise eine windschwächere Phase in den zweiten Zeitraum fällt.

Um bei dem dynamischen Ansatz den zeitabhängigen maximal zulässigen Strom zu bestimmen, wird gemäß einer weiteren Ausführungsform des erfindungsgemäßen Verfahrens vorgeschlagen, bei einer Änderung des eingespeisten Stroms den maximal zulässigen Strom erneut zu bestimmen. Das Ergebnis der erneuten Bestimmung kann zumindest mit dem Ergebnis der vorherigen Bestimmung überlagert werden. Vorzugsweise kann zur Bestimmung des maximal zulässigen Stroms die aktuelle und zukünftige Temperaturänderung im Bezugspunkt kontinuierlich oder in bestimmten Zeitabständen in Abhängigkeit der Überlagerung des aktuellen und in der Vergangenheit eingespeisten Stroms berechnet werden.

Gemäß einer weiteren Ausführungsform kann der maximal zulässige Strom in Abhängigkeit des Widerstands des Seekabels und/oder des Abstands des Seekabels zu dem Bezugspunkt und/oder des Abstands des an der Meeresoberfläche gespiegelten Seekabels zu dem Bezugspunkt und/oder der thermischen Leitfähigkeit des Meeresbodens und/oder des thermischen Diffusionskoeffizienten des Meeresbodens bestimmt werden. Insbesondere kann ein zeitvarianter, maximal zulässiger Strom in Abhängigkeit sämtlicher Parameter bestimmt werden. Vorzugsweise kann eine Berechungsvorschrift beispielsweise in einer geeigneten Recheneinrichtung implementiert werden. Die Recheneinrichtung, wie eine Prognoseeinrichtung, kann dazu eingerichtet sein, mittels dieser Parameter und dem Wert des Temperaturparameters durch die Berechungsvorschrift den maximal zulässigen Strom zu berechnen. Eine zeitnahe und genaue Bestimmung des maximal zulässigen Stroms ist möglich.

Ein weiterer Aspekt der vorliegenden Erfindung ist ein Offshore-Windenergiesystem gemäß dem Patentanspruch 9. Das Offshore-Windenergiesystem umfasst mindestens ein Seekabel. Das Offshore-Windenergiesystem umfasst mindestens eine Stromerfassungseinrichtung eingerichtet zum Erfassen eines in einem Einspeisepunkt des Seekabels eingespeisten Stroms.

Das Offshore-Windenergiesystem weist eine Prognoseeinrichtung auf. Die Prognoseeinrichtung ist zum Bestimmen eines für das Seekabel maximal zulässigen Stroms in Abhängigkeit eines vorgegeben Wertes eines Temperaturparameters in einem Bezugspunkt, welcher in einer vorgegeben Tiefe des Meeresbodens liegt, eingerichtet. Das Offshore-Windenergiesystem weist eine Regelungseinrichtung auf. Die Regelungseinrichtung ist zum Regeln des in das Seekabel eingespeisten Stroms eingerichtet, derart, dass der eingespeiste Strom den bestimmten maximal zulässigen Strom nicht übersteigt.

Insbesondere kann das zuvor beschriebene Verfahren zur Stromregelung in dem erfindungsgemäßen Offshore-Windenergiesystem verwendet werden. Im Gegensatz zum Stand der Technik wird erfindungsgemäß der über das mindestens eine Seekabel zu übertragene Strom derart geregelt, dass ein von einem Temperaturkriterium abhängiger maximaler Strom nicht überschritten wird. Durch die Bestimmung des maximal zulässigen Stroms kann zudem die maximal zulässige Strommenge über das mindestens eine Seekabel übertragen werden.

Das Offshore-Windenergiesystem kann neben mindestens einem Seekabel mindestens eine Windkraftanlage und mindestens eine Substation aufweisen. Die Substation kann über mindestens ein Seekabel, vorzugsweise mindestens zwei Seekabel mit einer Onshore-Kopfstation, verbunden sein. Bei der Prognoseeinrichtung kann es sich insbesondere um eine Recheneinrichtung, wie einen Computer oder dergleichen, handeln. Die Prognoseeinrichtung und die Regelungseinrichtung können an einer beliebigen Position innerhalb des Offshore-Windenergiesystems, wie in einer Zentrale und/oder einer Substation und/oder einer Windkraftanlage, angeordnet sein. Die Stromerfassungseinrichtung, vorzugsweise eine Strommesseinrichtung, kann vorzugsweise in der Nähe des Einspeisepunktes des Seekabels angeordnet sein, um den (aktuell) eingespeisten Strom zu messen.

Die Prognoseeinrichtung kann dazu eingerichtet sein, dass mit Hilfe des für die Zukunft berechenbaren Temperaturanstiegs eine Überschreitung des maximalen Temperaturanstieges vermieden bzw. minimiert werden kann.

Grundsätzlich können als Regelungseinrichtung verschiedene Regler eingesetzt werden. Gemäß einer bevorzugten Ausführungsform des erfindungsgemäßen Offshore-Windenergiesystems kann die Regelungseinrichtung ein PI Regler sein. Ein PI Regler ist in einfacher Weise insbesondere bei einem dynamischen Ansatz mit einer Zeitverzögerung des Temperaturanstiegs von Stunden bis Tagen einsetzbar.

Die Merkmale der Verfahren und Vorrichtungen sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, das erfindungsgemäße Verfahren zur Stromregelung und das erfindungsgemäße Offshore-Windenergiesystem auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:

Fig. 1     eine schematische Ansicht eines Ausführungsbeispiels eines Offshore-Windenergiesystems gemäß der vorliegenden Erfindung;

Fig. 2     eine schematische Ansicht eines Flussdiagramms eines Ausführungsbeispiels eines Verfahrens gemäß der Erfindung; und

Fig. 3     eine schematische Ansicht eines im Meeresboden angeordneten Seekabels eines Offshore-Windenergiesystems gemäß der vorliegenden Erfindung.

Nachfolgend werden für gleiche Elemente gleiche Bezugszeichen verwendet.

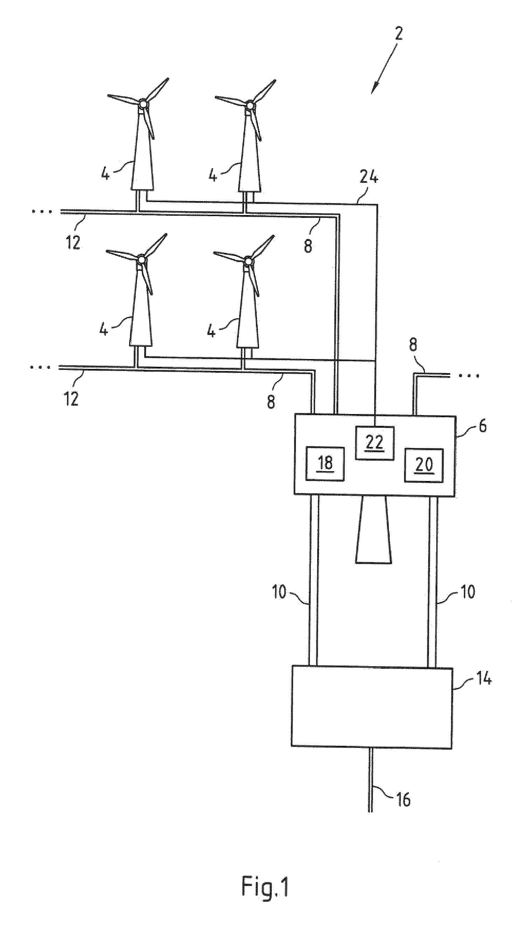

Die Figur 1 zeigt eine schematische Ansicht eines Ausführungsbeispiels eines Offshore-Windenergiesystems 2 gemäß der vorliegenden Erfindung.

Das Offshore-Windenergiesystem 2 umfasst eine Substation 6, wie eine Umspannstation 6. Darüber hinaus ist eine Mehrzahl an Offshore-Windkraftanlagen 4 angeordnet, um die Windenergie in elektrische Energie zu wandeln. Die Windkraftanlagen 4 und die Substation 6 sind miteinander über eine Mehrzahl von Seekabel 8 elektrisch verbunden. Ein Seekabel 8 ist insbesondere dazu eingerichtet, die von einer Windkraftanlage 4 erzeugte elektrische Energie zur nächsten Windkraftanlage 4 bzw. an die Substation 6 zu übertragen.

Im vorliegenden Ausführungsbeispiel ist eine Mehrzahl von Windkraftanlagen 4 in mehreren Strängen 12 bzw. Strings 12 in Reihe geschaltet. Beispielsweise können acht Stränge mit jeweils sechs Windkraftanlagen vorgesehen sein.

Vorliegend sind zu Gunsten einer besseren Übersicht lediglich zwei Stränge 12 mit jeweils drei Windkraftanlagen 4 abgebildet. Ein Ende eines Strangs 12 ist elektrisch über ein Seekabel 8 mit der Substation 6 verbunden. Die beiden anderen Enden können über ein zusätzliches (nicht dargestelltes) Seekabel miteinander verbunden werden. Ferner kann vorgesehen, dass ein Strang optional mit mehreren anderen Strängen verbunden werden kann. Es versteht sich, dass gemäß anderen Varianten der Erfindung die Windkraftanlagen auch in Ringstrukturen angeordnet sein können.

Neben (nicht dargestellten) Umspanneinrichtungen, wie Transformatoren, weist die Substation 6 vorliegend eine Stromerfassungseinrichtung 18, eine Prognoseeinrichtung 20 und eine Regelungseinrichtung 22 auf.

Die Stromerfassungseinrichtung 18 kann einen oder mehrere Stromsensor/en umfassen, um den Strom, der in ein oder mehrere Seekabel/n 10 eingespeist wird, zu messen. Der mindestens eine gemessene Stromwert kann der Prognoseeinrichtung 20 und/oder der Regelungseinrichtung 22 zur Verfügung gestellt werden.

Die Prognoseeinrichtung 20 kann eine Recheneinrichtung 20 sein. Beispielsweise kann ein Computer oder eine ähnliche Einrichtung vorgesehen sein. Die Prognoseeinrichtung 20 ist dazu eingerichtet, einen maximal zulässigen in mindestens ein Seekabel 10 einspeisbaren Strom zu bestimmen. Hierbei bestimmt die Prognoseeinrichtung 20 den maximal zulässigen Strom insbesondere in Abhängigkeit eines vorgegebenen Temperaturanstiegskriteriums, wie dem 2K-Kriterium. Es kann ein zukünftiges Überschwingen der Temperaturänderung über zwei Kelvin vermieden werden.

Die Regelungseinrichtung 22 ist dazu eingerichtet, den in das mindestens eine Seekabel 10 eingespeisten Strom derart zu regeln, dass dieser den maximal zulässigen Strom nicht überschreitet. Beispielsweise kann die Regelungseinrichtung 22 dazu eingerichtet sein, mindestens einen Stromerzeugungssollwert für mindestens eine Windkraftanlage 4 vorzugeben. Vorzugweise kann die Regelungseinrichtung 22 eine zentrale Regelungseinrichtung 22 sein, um zumindest für sämtliche mit der Substation 6 verbundene Windkraftanlagen 4 den jeweiligen Stromerzeugungssollwert vorzugeben. Der Stromerzeugungssollwert gibt insbesondere der jeweiligen Windkraftanlage 4 den zu erzeugenden Strom vor. Dieser kann in einem einfachen Fall der maximal mögliche Strom sein. Auch kann es sein, dass ein bestimmter Stromerzeugungssollwert aufgrund von äußeren Anforderungen, die von einem öffentlichen Netzbetreiber vorgegeben werden, gesetzt werden muss. Darüber hinaus kann ein bestimmter Stromerzeugungssollwert zur Einhaltung eines Temperaturkriteriums, wie dem 2K-Kriteriums, vorgegeben werden, wie nachfolgend erläutert werden wird.

Zur Kommunikation mit den Windkraftanlagen 4 ist ein Kommunikationsnetz 24, welches drahtlos und/oder drahtgebundenen konfiguriert sein kann, vorgesehen. Zumindest die Stromerzeugungssollwerte können über das Kommunikationsnetz 24 von der Regelungseinrichtung 22 an die Windkraftanlangen 4 übertragen werden. Es versteht sich, dass das Kommunikationsnetz 24 auch für weitere Anwendungen genutzt werden kann.

Die Seekabel 10, vorliegend sind zwei Seekabel 10 dargestellt, sind eingerichtet, den von dem Offshore-Windenergiesystem 2 erzeugten Strom an eine Kopfstation 14, wie eine HGÜ-Kopfstation 14, zu übertragen. Die HGÜ-Kopfstation 14 kann insbesondere auf dem Land angeordnet sein, um den erzeugten Strom in ein öffentliches Netz 16 einzuspeisen. Die HGÜ-Kopfstation 14 kann hierfür weitere (nicht dargestellte) Umspanneinrichtungen aufweisen.

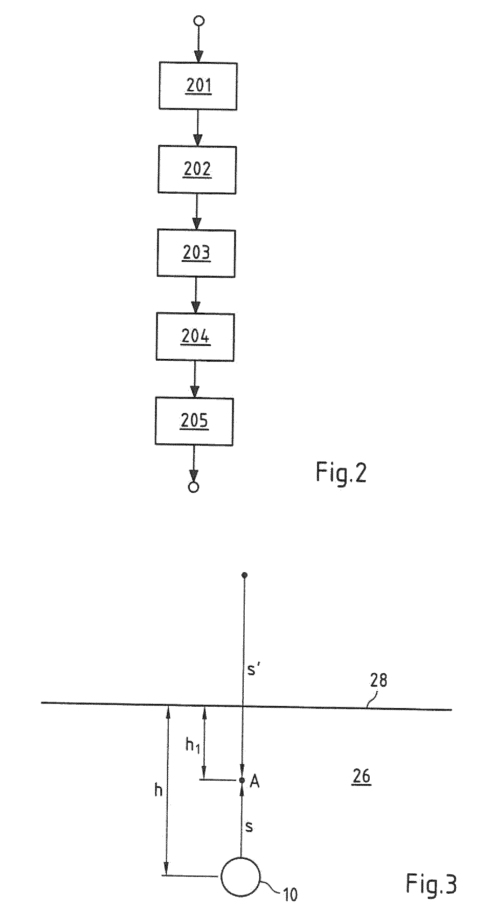

Die Funktionsweise des Offshore-Windenergiesystems 2 wird nachfolgend mit Hilfe der Figuren 2 und 3 erläutert. Figur 2 zeigt ein Flussdiagramm eines Ausführungsbeispiels eines Verfahrens zur Stromregelung in dem Offshore-Windenergiesystem 2. Dieses Verfahren wird nachfolgend beispielhaft für den Fall betrachtet, dass eines der zwei Seekabel 10 für die Stromübertragung nicht mehr zur Verfügung steht, ist jedoch nicht hierauf beschränkt.

Beispielhaft seien als weiterer Anwendungsbereiche die Planung eines neuen Offshore-Windenergiesystems und die Erweiterung eines bestehenden Offshore-Windenergiesystems genannt. Wenn ein Offshore-Windenergiesystems erweitert wird, kann für eine bessere Nutzung der vorhandenen Ressourcen das vorliegende Verfahren ebenso eingesetzt werden wie beispielsweise bei der Planung eines neuen Offshore-Windenergiesystems, um kleinere Kabelquerschnitte und/oder eine geringere Anzahl von Kabelverbindungen und/oder eine geringere Kabeltiefe zu erzielen.

In einem ersten Schritt 201 wird durch eine geeignete Überwachungseinrichtung der Ausfall eines der beiden Seekabel 10 erfasst. Beispielsweise kann das Seekabel 10 oder eine mit dem Seekabel verbundene Einrichtung, wie ein Transformator, defekt sein. Dann steht zur Stromübertragung für eine bestimmte Zeitdauer nur noch ein Seekabel 10 zur Verfügung.

Der Ausfall eines Seekabels 10 hat zur Folge, dass (in der Regel) die maximal von sämtlichen Windekraftanlagen 4 erzeugbare Leistung über das verbleibende Seekabel 10 nicht (mehr) übertragen werden kann/darf.

Ein Grund hierfür ist das so genannte 2K-Kriterium. Das 2K-Kriterium verlangt, dass der Temperaturanstieg im Meeresboden oberhalb des Seekabels 10 in einer Tiefe von 0,2 m bzw. 0,3 m 2 Kelvin nicht übersteigen darf. Der Temperaturanstieg eines Seekabels 10 ist grundsätzlich abhängig von der Verlustleistung im Seekabel 10. Die Verlustleistung hängt unter anderem von dem eingespeisten Strom ab. Bei einem Ausfall eines Seekabels 10 ist daher eine Regelung des eingespeisten Stroms erforderlich, um das Temperaturkriterium einzuhalten.

In einem nächsten Schritt 202 kann der (aktuell) in das Seekabel 10 eingespeiste Strom erfasst werden. Beispielsweise kann die Stromerfassungseinrichtung den Strom messen. Der gemessene Strom kann zumindest der Regelungseinrichtung 22 zur Verfügung gestellt werden.

In einem weiteren Schritt 203, der bevorzugt parallel zum Schritt 202 durchgeführt werden kann, kann der maximal zulässige Strom, welcher unter Einhaltung des 2K-Kriteriums in das Seekabel 10 eingespeist werden kann, bestimmt werden.

Bei einem ersten stationären Ansatz kann in der Recheneinrichtung 20 folgende Berechnungsvorschrift implementiert sein

$$\Delta \vartheta(x, y) = \frac{P'}{2 \cdot \pi \cdot \lambda} \ln \frac{s'}{s}, \qquad \qquad \text{(a)}$$

wobei $\Delta\vartheta(x, y)$ der Temperaturanstieg ist, P'die Verlustleistung pro Meter ist, $\lambda$ die thermische Leitfähigkeit des Meeresbodens, s die Entfernung des Seekabels 10 zu dem Messbezugspunkt in einer Tiefe von 0,2 m von der Oberfläche des Meeresbodens und s' die Entfernung zu diesem Bezugspunkt von einem an dem Meeresboden gespiegelten Seekabels.

Zur Erläuterung der Parameter der Berechnungsvorschrift (a) ist in der Figur 3 ein Seekabel 10 im Meeresboden 26 dargestellt. Von der Oberfläche 28 des Meeresbodens 26 ist das Seekabel 10 um eine Tiefe h beabstandet. Der Messbezugspunkt A ist von der der Oberfläche 28 des Meeresbodens 26 mit einer Tiefe von $h_1$ von 0,2 m beabstandet. Ferner können der Figur 3 die Parameter s und s' entnommen werden.

Die Recheneinrichtung 20 kann dazu eingerichtet sein, aus der Berechungsvorschrift (a) den zeitunabhängigen maximal zulässigen Strom zu bestimmen. Bei Annahme eines maximalen Temperaturanstiegs von 2 Kelvin im Bezugspunkt A zur Einhaltung des 2K-Kriteriums, kann die Recheneinrichtung 20 aus der Verlustleitung P' den maximal zulässigen Strom berechnen. Dieser Wert kann der Regelungseinrichtung 22 zur Verfügung gestellt werden.

Die Regelungseinrichtung 22 kann in einem nächsten Schritt 204 aus dem (aktuell) eingespeisten Strom, welcher von der Stromerfassungseinrichtung 18 erfasst wird, und diesem Wert den in das Seekabel 10 einzuspeisenden Strom regeln. Beispielsweise kann die Regelungseinrichtung 22 in zuvor beschriebener Weise aus diesen Werten mindestens einen Stromerzeugungssollwert bestimmen. Dieser kann an mindestens eine Windkraftanlage 4 über das Kommunikationsnetz 24 übertragen werden.

In Schritt 205 kann nach einer Beseitigung der Störung des weiteren Seekabelsystems wieder in den Normalbetrieb gewechselt und der Strom über beide Seekabel 10 übertragen werden.

Alternativ oder zusätzlich zum ersten Ansatz kann in Schritt 203 der maximal zulässige Strom auch mit einem dynamischen Ansatz bestimmt werden. Bei diesem Ansatz kann in der Recheneinrichtung 20 folgende Berechnungsvorschrift implementiert sein

$$\Delta\vartheta(t) = \frac{P'}{2 \cdot \pi \cdot \lambda} \cdot \left\{ E1\left[\frac{s^2}{4 \cdot \alpha_B \cdot t}\right] - E2\left[\frac{s'^2}{4 \cdot \alpha_B \cdot t}\right] \right\}, \qquad (b)$$

wobei E1(x) folgende Exponential-Integral-Funktion ist

$$E1(x) = -0{,}5772 - \ln x - \sum_{n=1}^{\infty} (-1)^n \cdot \frac{x^n}{(n \cdot n!)}. \qquad (c)$$

Hierbei ist $x = \frac{s^2}{4 \cdot \alpha_B \cdot t}$ und $\alpha_B = \frac{\lambda}{\delta \cdot c}$ ist, wobei $\alpha_B$ der thermische Diffusionskoeffizient des Meeresbodens ist, $\delta$ die Dichte des Meeresbodens ist und c die spezifische Wärmekapazität des Meeresbodens ist.

Ferner ist erkannt worden, dass Temperaturänderungen $\Delta\vartheta(t)$ nach Stromänderungen mit einer Zeitverzögerung von Stunden bis Tagen stattfinden. Dies ergibt sich auch aus den Gleichungen (b) und (c). Mit der Berechungsvorschrift (b) kann in Abhängigkeit des gemessenen Stroms (Schritt 202) die aktuelle und zukünftige Temperatur im Bezugspunkt A bestimmt werden. Ein maximal zulässiger zeitabhängiger Strom kann bestimmt und der Regelungseinrichtung 22 zur Verfügung gestellt werden.

Der Vorteil des dynamischen Ansatzes im Vergleich zum stationären Ansatz ist insbesondere der, dass temporär höhere Stromwerte als mit dem stationären Ansatz zulässig sind, wenn früh genug wieder ein geringerer Stromwert eingestellt wird. Da bei Offshore-Windenergiesystemen eine Fluktuation der Leistung aufgrund unterschiedlicher meteorologischer Verhältnisse, insbesondere Windverhältnisse, auftreten kann, kann mit diesem Regelungsansatz beispielsweise im Falle relativ geringer Windgeschwindigkeiten nach relativ hoher Windgeschwindigkeiten, insgesamt mehr Leistung eingespeist werden.

Als Regelungseinrichtung 22 kann bevorzugt ein PI Regler eingesetzt werden. Ein PI Regler ist in einfacher Weise insbesondere bei einer Zeitverzögerung des Temperaturanstiegs von Stunden bis Tagen einsetzbar.

Zur Berechnung des aktuellen Temperaturanstiegs in dem Bezugspunkt kann in Schritt 203 vorteilhaft bei jeder Stromänderung erneut die Gleichung (b) gelöst werden. Vorteilhafterweise kann das neue Ergebnis mit zumindest dem vorherigen Ergebnis überlagert werden. Es ist erkannt worden, dass jedoch nicht sämtliche vorherige Ergebnisse überlagert werden müssen. Grund hierfür ist, dass der Einfluss einer Stromänderung je nach Betrag und Vorwärmung des Bodens zeitabhängig ist und nach einer bestimmten Zeit nachlässt. Durch die Begrenzung der zu lösenden Gleichungen kann die Rechenzeit und/oder die erforderliche Rechenleistung reduziert werden. Auch ist es möglich, basierend auf Erfahrungswerten, je nach Stromänderung und aktueller Temperatur, bereits im Vorfeld die Anzahl der Berechnungen festzulegen.

Weiterhin ist es vorteilhaft, wenn in einer Speichereinrichtung der Recheneinrichtung 20 der in der Berechungsvorschrift in geschweiften Klammern stehende Ausdruck für einen maximalen Zeitbereich diskret hinterlegt wird. Dies ist möglich, da dieser Ausdruck stromunabhängig ist. Der Vorteil einer diskreten Hinterlegung liegt insbesondere in einer weiteren Reduzierung der Rechenzeit und -leistung.

Zur Verdeutlichung der Vorteile der vorliegenden Stromregelung werden nachfolgend einige Beispiele erläutert und miteinander verglichen.

Beispiel 1 (Stand der Technik):

Es wird nachfolgend von einer maximalen Wirkleistung des Offshore-Windenergiesystems von 288 MW und zwei 155 kV Seekabel 10 ausgegangen. Die maximale Übertragungsscheinleistung beträgt 181 MVA und der maximale Scheinstrom bei Nennspannung beträgt 675 A. Die maximale Übertragungsscheinleistung zur Einhaltung des 2K-Kriteriums ist 161 MVA und der maximale Scheinstrom bei Nennspannung ca. 600 A.

Im Stand der Technik erlaubt der Netzbetreiber bei Ausfall eines Seekabelsystems 10 eine maximale Wirkleistung von 144 MW pro Seekabel 10, da sich bei maximalem Leistungsfaktor von 0,925 kapazitiv ein Scheinstrom von knapp unter 600 A (580 A) ergibt.

Beispiel 2 (stationärer Ansatz):

Wenn davon ausgegangen wird, dass ein Leistungsfaktor ungleich 1 und eine Spannung ungleich 1 p.u. extrem selten auftreten, liegt beim stationären Regelansatz der konstante maximale Wirkleistungsgewinn im obigen Beispiel bei 17 MW.

Beispiel 3 (dynamischer Ansatz):

Das Offshore-Windenergiesystem 2 aus Beispiel 1 darf über 5 Tage 170 MW einspeisen, ohne das 2K-Kriterium zu gefährden.
Es darf danach aber maximal 150 MW zur Einhaltung des 2K-Kriteriums einspeisen.
Wenn in einem Zeitraum über 5 Tage manchmal oder immer mehr als 161 MW eingespeist werden konnte, danach aber 5 Tage immer unter 150 MM eingespeist werden konnte, kann das 2-Kriterium eingehalten werden und gleichzeitig ein höhere Strommenge eingespeist werden, als beim Beispiel 2.
Ferner sei angemerkt, dass folgende Randbedingung für den Stromsollwert eingehalten werden sollten.
Zur garantierten Einhaltung der Netzanschlussregeln ist weiterhin eine Blindstrompriorität notwendig, um den vom Netzbetreiber vorgegebenen Leistungsfaktor zu ermöglichen. Das heißt, dass bei Vorgabe eines $\cos(\varphi)$ ungleich eins der maximal zulässige Scheinstrom sich aus dem notwendigen Verhältnis aus Blindstrom und Wirkstrom ergibt.

**Patentansprüche**

1. Verfahren zur Stromregelung eines Offshore-Windenergiesystems (2), wobei das Offshore-Windenergiesystem (2) mindestens ein Seekabel (8, 10) aufweist, umfassend:

   - Erfassen des an einem Einspeisepunkt des Seekabels (8, 10) eingespeisten Stroms,
   - Bestimmen eines für das Seekabel (8, 10) maximal zulässigen Stroms in Abhängigkeit eines vorgegeben Wertes eines maximal zulässigen Temperaturparameters in einem Bezugspunkt, welcher in einer vorgegeben Tiefe des Meeresbodens (26) liegt, wobei der maximal zulässige Strom in Abhängigkeit des Abstands des Seekabels (8, 10) zu dem Bezugspunkt bestimmt wird, und
   - Regeln des in das Seekabel (8, 10) eingespeisten Stroms, derart, dass der eingespeiste Strom den bestimmten maximal zulässigen Strom nicht übersteigt.

2. Verfahren nach Anspruch 1, **dadurch gekennzeichnet, dass** zum Regeln des eingespeisten Stroms mindestens ein Stromerzeugungssollwert von mindestens einer Windkraftanlage (4) derart eingestellt wird, dass der eingespeiste Strom den bestimmten maximal zulässigen Strom nicht übersteigt.

3. Verfahren nach Anspruch 1 oder 2, **dadurch gekennzeichnet, dass**

   - der Temperaturparameter ein maximal zulässiger Temperaturanstieg ist,
   - wobei der maximal zulässige Wert des Temperaturanstiegs insbesondere 2 Kelvin beträgt.

4. Verfahren nach einem der vorherigen Ansprüche, **dadurch gekennzeichnet, dass**

   - der maximal zulässige Temperaturparameter ein stationärer Temperaturparameter ist, und
   - der bestimmte maximal zulässige Strom zeitunabhängig ist.

5. Verfahren nach Anspruch 4, **dadurch gekennzeichnet, dass** der maximal zulässige Strom in Abhängigkeit des Widerstands des Seekabels (8, 10) und/oder des Abstands des an der Meeresoberfläche (28) gespiegelten Seekabels (8, 10) zu dem Bezugspunkt und/oder der thermischen Leitfähigkeit des Meeresbodens (26) bestimmt wird.

6. Verfahren nach einem der vorherigen Ansprüche 1 bis 3, **dadurch gekennzeichnet, dass**

   - der maximal zulässige Temperaturparameter ein zeitabhängiger Temperaturparameter ist, und
   - der bestimmte maximal zulässige Strom zeitabhängig ist.

7. Verfahren nach Anspruch 6, **dadurch gekennzeichnet, dass**

- bei einer Änderung des eingespeisten Stroms der maximal zulässige Strom erneut bestimmt wird, und
- das Ergebnis der erneuten Bestimmung zumindest mit dem Ergebnis der vorherigen Bestimmung überlagert wird.

8. Verfahren nach Anspruch 6 oder 7, **dadurch gekennzeichnet, dass** der maximal zulässige Strom in Abhängigkeit des Widerstands des Seekabels (8, 10) und/oder des Abstands des Seekabels (8, 10) zu dem Bezugspunkt und/oder des Abstands des an der Meeresoberfläche (28) gespiegelten Seekabels (8, 10) zu dem Bezugspunkt und/oder der thermischen Leitfähigkeit des Meeresbodens (26) und/oder des thermischen Diffusionskoeffizienten des Meeresbodens (26) bestimmt wird.

9. Offshore-Windenergiesystem (2) mit

- mindestens einem Seekabel (8, 10), und
- mindestens einer Stromerfassungseinrichtung (18) eingerichtet zum Erfassen

eines in einem Einspeisepunkt des Seekabels (8, 10) eingespeisten Stroms,
**dadurch gekennzeichnet, dass**

- eine Prognoseeinrichtung (20) vorgesehen ist,
- wobei die Prognoseeinrichtung (20) eingerichtet ist zum Bestimmen eines für das Seekabel (8, 10) maximal zulässigen Stroms in Abhängigkeit eines vorgegeben Wertes eines maximal zulässigen Temperaturparameters in einem Bezugspunkt, welcher in einer vorgegeben Tiefe des Meeresbodens (26) liegt, wobei der maximal zulässige Strom in Abhängigkeit des Abstands des Seekabels (8, 10) zu dem Bezugspunkt bestimmt wird, und
- eine Regelungseinrichtung (22) vorgesehen ist,
- wobei die Regelungseinrichtung (22) zum Regeln des in das Seekabel (8,10) eingespeisten Stroms eingerichtet ist, derart, dass der eingespeiste Strom den bestimmten maximal zulässigen Strom nicht übersteigt.

10. Offshore-Windenergiesystem (2) nach Anspruch 9, **dadurch gekennzeichnet, dass** die Regelungseinrichtung (22) ein PI-Regler ist.

11. Offshore-Windenergiesystem (2) nach einem der Ansprüche 9 oder 10, **dadurch gekennzeichnet, dass** das Offshore-Windenergiesystem (2) eine Mehrzahl von Windkraftanlagen (4)umfasst, wobei die Windkraftanlagen (4) über mindestens ein Seekabel (8) mit einer Substation (6) verbunden sind.

12. Offshore-Windenergiesystem (2) nach Anspruch 11, **dadurch gekennzeichnet, dass** die Substation (6) über zwei Seekabel (10) mit einer Onshore-Kopfstation (14) verbunden ist, wobei das Verfahren nach einem der Ansprüche 1 bis 6 bei einem Ausfall von zumindest einem der zwei Seekabel (10) genutzt wird.

13. Offshore-Windenergiesystem (2) nach einem der Ansprüche 11 oder 12, **dadurch gekennzeichnet, dass** die Substation (6) die Regelungseinrichtung (22), die Prognoseeinrichtung (20) und die Stromerfassungseinrichtung (18) umfasst.

14. Offshore-Windenergiesystem (2) nach einem der vorherigen Ansprüche 9 bis 13, **dadurch gekennzeichnet, dass** die Regelungseinrichtung (22) eine zentrale Regelungseinrichtung (22) ist, um zumindest für sämtliche mit der Substation (6) verbundene Windkraftanlagen (4) den jeweiligen Stromerzeugungssollwert vorzugeben.

Fig.1

EP 3 032 686 A1

Fig.2

Fig.3

11

**Europäisches Patentamt**
**European Patent Office**
**Office européen des brevets**

# EUROPÄISCHER RECHERCHENBERICHT

Nummer der Anmeldung

EP 16 15 3362

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | F. Richert ET AL: "Kabeldimensionierung bei der Netzanbindung von Offshore-Windparks unter Berücksichtigung der zeitlichen Leistungsabgabe", DEWI Magazin Nr. 24, Februar 2004, 1. Februar 2004 (2004-02-01), Seiten 38-43, XP055127663, Gefunden im Internet: URL:http://www.dewi.de/dewi/fileadmin/pdf/publications/Magazin_24/06.pdf [gefunden am 2014-07-09] | 1-5,9 | INV. H02J3/38 F03D7/02 F03D9/00 |
| Y | * das ganze Dokument * ----- | 11,13,14 | |
| Y | US 2012/061963 A1 (THISTED JAN [DK]) 15. März 2012 (2012-03-15) * Abbildung 3 * ----- | 11,13,14 | |
| A | DE 28 36 308 A1 (V ELEKTROTECH I V I LENINA) 1. März 1979 (1979-03-01) * Anspruch 1 * * Seite 6 - Seite 8 * * Seite 24, Absatz 2 * ----- | 1,9 | |
| | | | RECHERCHIERTE SACHGEBIETE (IPC) |
| | | | F03D H01B H02G H02J |

Der vorliegende Recherchenbericht wurde für alle Patentansprüche erstellt

| Recherchenort | Abschlußdatum der Recherche | Prüfer |
|---|---|---|
| München | 13. April 2016 | Telega, Pawel |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 16 15 3362

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-04-2016

| Im Recherchenbericht angeführtes Patentdokument | Datum der Veröffentlichung | Mitglied(er) der Patentfamilie | Datum der Veröffentlichung |
|---|---|---|---|
| US 2012061963 A1 | 15-03-2012 | AU 2009338570 A1 | 30-06-2011 |
| | | CA 2756135 A1 | 05-08-2010 |
| | | CN 102257721 A | 23-11-2011 |
| | | DK 2384540 T3 | 19-01-2015 |
| | | EP 2384540 A2 | 09-11-2011 |
| | | ES 2528595 T3 | 10-02-2015 |
| | | JP 2012516667 A | 19-07-2012 |
| | | KR 20110111299 A | 10-10-2011 |
| | | US 2012061963 A1 | 15-03-2012 |
| | | WO 2010086032 A2 | 05-08-2010 |
| DE 2836308 A1 | 01-03-1979 | CA 1132193 A | 21-09-1982 |
| | | CH 644719 A5 | 15-08-1984 |
| | | DE 2836308 A1 | 01-03-1979 |
| | | SE 444625 B | 21-04-1986 |

EPO FORM P0461

Für nähere Einzelheiten zu diesem Anhang : siehe Amtsblatt des Europäischen Patentamts, Nr.12/82